(19) Europäisches Patentamt
European Patent Office
Office européen des brevets

(11) **EP 3 425 308 B1**

(12) **EUROPEAN PATENT SPECIFICATION**

(45) Date of publication and mention
of the grant of the patent:
**22.01.2020 Bulletin 2020/04**

(51) Int Cl.:
***F25B 31/00*** *(2006.01)*

(21) Application number: **18180491.5**

(22) Date of filing: **28.06.2018**

(54) **AIR CONDITIONING APPARATUS**

KLIMATISIERUNGSVORRICHTUNG

APPAREIL DE CLIMATISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2017 JP 2017131911**

(43) Date of publication of application:
**09.01.2019 Bulletin 2019/02**

(73) Proprietor: **Panasonic Intellectual Property
Management Co., Ltd.
Osaka-shi, Osaka 540-6207 (JP)**

(72) Inventors:
• **MASUDA, Tetsuya
Osaka, 540-6207 (JP)**

• **HASEGAWA, Hiroshi
Osaka, 540-6207 (JP)**
• **SUITO, Kazuaki
Osaka, 540-6207 (JP)**

(74) Representative: **Eisenführ Speiser
Patentanwälte Rechtsanwälte PartGmbB
Postfach 31 02 60
80102 München (DE)**

(56) References cited:
**EP-A1- 2 869 002      EP-A1- 2 908 062
JP-A- 2003 056 944**

EP 3 425 308 B1

**Description**

BACKGROUND OF THE INVENTION

Field of the Invention

The present invention relates to an air conditioning apparatus including a compressor that is driven by a gas engine.

Description of the Related Art

There is proposed an air conditioning apparatus including a plurality of compressors having different capacities in an outdoor unit, and including a plurality of driving means that are provided correspondingly to the respective compressors, and control means that individually drives the plurality of compressors or drives the plurality of compressors in combination in accordance with a magnitude of a required load (Japanese Patent Laid-Open No. 2003-56944, for example).

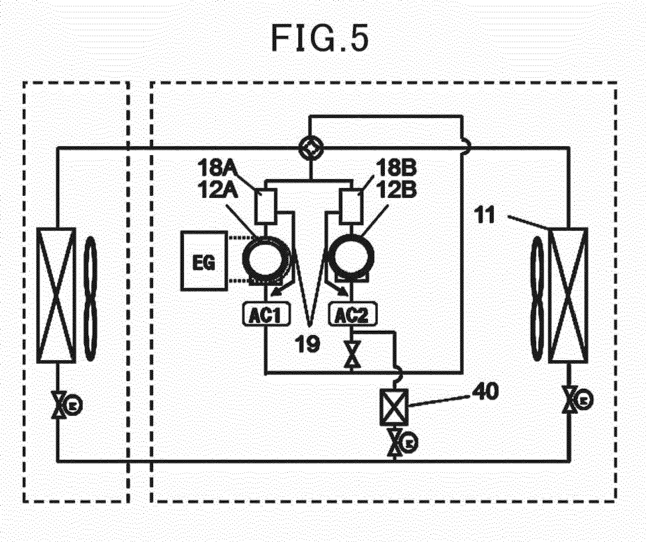

FIG. 5 is an apparatus configuration diagram of Japanese Patent Laid-Open No. 2003-56944, and a compressor 12A and a compressor 12B are connected in parallel in a refrigerating cycle. In the apparatus described in Japanese Patent Laid-Open No. 2003-56944, the compressor 12A with a large capacity is driven by a gas engine EG, and the compressor 12B with a small capacity is driven by an electric motor M.

When a load required of the compressor is small, the compressor 12B with a small capacity is driven by the electric motor M, when a required load is about medium, the compressor 12A with a large capacity is driven by the gas engine EG, and when a required load is large, the two large and small compressors are simultaneously driven by the respective driving means.

In the air conditioning apparatus that drives one compressor by one gas engine, the engine is selected and adjusted so as to be able to perform a highly efficient operation in response to a medium load which is required with a high frequency, so that when a small load is required and when a large load is required, the engine has to be operated at an engine speed outside of an engine speed region where a highly efficient operation can be performed.

In the technique disclosed in Japanese Patent Laid-Open No. 2003-56944, in the case of the load required at a heating operation time being a high load, a refrigerant that absorbs heat from outside air in an outdoor heat exchanger 11 is sucked by the compressor 12A which is driven by the gas engine EG via an accumulator AC, and a medium-temperature and medium-pressure refrigerant that absorbs heat from gas engine exhaust heat by an exhaust heat recovering heat exchanger 40 is sucked by the electric motor drive compressor 12B via an accumulator AC2.

In this configuration, a more efficient operation is enabled by using the exhaust heat of the internal combustion engine which is adopted as the driving means of the compressor with a large capacity, in heating the refrigerant which is sucked by the compressor with a small capacity.

In general, in a refrigerating cycle apparatus such as an air conditioning apparatus, a compressor discharges a part of lubricating oil for the compressor with a refrigerant during an operation of the compressor. If the discharged lubricating oil does not return to the compressor, an amount of oil in the compressor, which lubricates a sliding portion, gradually decreases to cause malfunction, so that an oil separator for separating the lubricating oil discharged from the compressor from the refrigerant, and an oil returning circuit for returning the lubricating oil separated by the oil separator to the compressor have been conventionally provided.

Further, the aforementioned conventional air conditioning apparatus using the compressor having the gas engine as the driving source is used in an office building and a large store, so that in the large air conditioning apparatus like this, a compressor with a large operating capacity is used, a circulation amount of the refrigerant is large, much lubricating oil is discharged with the refrigerant, the oil separator for separating the refrigerant and the lubricating oil increases in size, and an inner capacity of the oil separator sometimes exceeds 10 litters.

In the aforementioned conventional air conditioning apparatus, the oil separator and the oil returning circuit are provided in each of the discharge pipes of the two compressors which are connected in parallel, and the malfunction of the compressor is prevented by returning the lubricating oil which is separated in the respective oil separators to the respective compressors.

The reason why the two oil separators are used in this way is that the pressures of the refrigerants which are sucked by the compressors provided in parallel differ from each other at the high load time in the heating operation, and the suction pressure of the refrigerant of the compressor having a large capacity is lower than the suction pressure of the refrigerant of the compressor with a small capacity, because a highly efficient heating operation is enabled by using exhaust heat of the internal combustion engine which is adopted as the driving means of the compressor with a large capacity in heating the refrigerant which is sucked by the compressor with a small capacity at the high load time in the heating operation.

Accordingly, the aforementioned conventional air conditioning apparatus requires the two oil separators, and therefore has the problem of the apparatus increasing in size.

EP patent application 2 908 062 A1 forming the closest prior art discloses an outdoor unit of an air conditioner which includes a power-supply driving compressor and a non-power-supply driving compressor that are connected in parallel, the power-supply driving compressor being driven by an electric power, the non-power driving compressor being driven by a driving source other than the electric power, and a body housing divided into an upper portion and a lower portion by a partition plate. In the outdoor unit, a heat exchanger room is provided at the upper portion, and a machine room is provided at the lower portion, and the power-supply driving compressor is provided at the heat exchanger room, and the non-power-supply driving compressor is provided at the machine room.

The present invention solves the aforementioned conventional problem, and has an object to provide an air conditioning apparatus that can make the number of oil separators for securing reliability of compressors only one, and achieve reduction in size of the apparatus, while realizing a highly efficient heating operation.

SUMMARY OF THE INVENTION

In order to solve the aforementioned conventional problem, an air conditioning apparatus of the present invention is an air conditioning apparatus that performs air conditioning by circulating a refrigerant, the air conditioning apparatus including a first compressor having a gas engine as a driving source and a second compressor having an electric motor as a driving source, the first compressor and the second compressor being connected in parallel, wherein a bypass pipe that connects a suction pipe of the second compressor and a refrigerant liquid pipe is provided, and an exhaust heat recovering decompression device and an exhaust heat recovering heat exchanger are provided in the bypass pipe sequentially from the refrigerant liquid pipe, an oil separator is provided upstream of a junction section of discharge pipes of the first compressor and the second compressor, and an oil return pipe is provided in a bottom portion of the oil separator, and the oil return pipe is connected to a first oil return pipe and a second oil return, the first oil return pipe being connected to a low pressure gas pipe downstream of an accumulator via a first oil return adjusting valve, the second oil return pipe being connected to the bypass pipe downstream of the exhaust heat recovering heat exchanger via a second oil return adjusting valve.

According to the aforementioned configuration, at an individual operation of the first compressor or the second compressor, or when exhaust heat recovery is not performed in a parallel operation of the first compressor and the second compressor, the first oil return adjusting valve and the second oil return adjusting valve are adjusted, whereby a lubricating oil separated by the oil separator can be returned to the first compressor and the second compressor irrespective of operating states of the first compressor and the second compressor, so that the number of oil separators can be made one.

In the air conditioning apparatus of the present invention, the lubricating oil which is separated by the oil separator can be returned to the first compressor and the second compressor irrespective of operating states of the first compressor and the second compressor, so that the number of oil separators can be made one. As a result, reduction in size of the apparatus can be achieved while a highly efficient heating operation is realized.

BRIEF DESCRIPTION OF THE DRAWINGS

FIG. 1 is a refrigerating cycle diagram illustrating a configuration of Embodiment 1 of the present invention;

FIG. 2 is a block diagram illustrating a control configuration of the present embodiment;

FIG. 3 is a graph illustrating an optimal operation ratio based on magnitudes of loads of a gas engine drive compressor and an electric motor drive compressor in an air conditioning apparatus in the present embodiment;

FIG. 4 is a Molier chart illustrating refrigerating cycle operating points in the present embodiment; and

FIG. 5 is a refrigerating cycle diagram illustrating a conventional air conditioning apparatus in Japanese Patent Laid-Open No. 2003-56944.

DETAILED DESCRIPTION OF THE PREFERRED EMBODIMENT

A first aspect of the present invention is an air conditioning apparatus that performs air conditioning by circulating a refrigerant, he air conditioning apparatus including a first compressor having a gas engine as a driving source and a second compressor having an electric motor as a driving source, the first compressor and the second compressor being connected in parallel, wherein a bypass pipe that connects a suction pipe of the second compressor and a refrigerant liquid pipe is provided, and an exhaust heat recovering decompression device and an exhaust heat recovering heat exchanger are provided in the bypass pipe sequentially from the refrigerant liquid pipe, an oil separator is provided upstream of a junction section of discharge pipes of the first compressor and the second compressor, and an oil return pipe is provided in a bottom portion of the oil separator, and the oil return pipe is connected to a first oil return pipe and a second oil return pipe, the first oil return pipe being connected to a low pressure gas pipe downstream of an accumulator via a first oil return adjusting valve, the second oil return pipe being connected to the bypass pipe downstream of the exhaust heat recovering heat exchanger via a second oil return adjusting valve.

According to the above, at an individual operation of the first compressor or the second compressor, or when exhaust heat recovery is not performed in a parallel operation of the first compressor and the second compressor, the lubricating oil separated in the oil separator can be returned to the first compressor and the second compressor irrespective of the operating states of the first compressor and the second compressor by adjusting the first oil return adjusting valve and the second oil return adjusting valve, so that the number of oil separators can be made one. As a result, reduction in size of the apparatus can be achieved while a highly efficient heating operation is realized.

Further, since the exhaust heat recovering decompression device and the exhaust heat recovering heat exchanger are provided in the bypass pipe, so that it becomes possible to properly set the pressures of the refrigerant which vaporizes in the outdoor heat exchanger and the refrigerant which vaporizes in the exhaust heat recovering heat exchanger in accordance with the temperatures of the respective heat absorption sources, the pressure of the refrigerant which vaporizes in the exhaust heat recovering heat exchanger can be set to be higher than the pressure of the refrigerant which vaporizes in the air heat exchanger, and power of the compressor which sucks the refrigerant which is vaporized in the exhaust heat recovering heat exchanger can be reduced.

Further, exhaust heat of the gas engine which is adopted as the driving means of the first compressor is used in heating of the refrigerant which is sucked by the compressor of the second compressor having the electric motor as the driving source, so that it becomes possible to make the number of oil separators one while achieving high efficiency at the heating time.

In a second aspect of the present invention, in the suction pipe of the second compressor, a check valve is provided at an upstream side from a connection section of the bypass pipe and the suction pipe.

According to the above, the medium pressure refrigerant which flows into the second suction pipe via the bypass pipe can be prevented from flowing into the first suction pipe where the low-pressure refrigerant flows.

A third aspect of the present invention further includes a control device which is configured to control opening degrees of the first oil return adjusting valve and the second oil return adjusting valve, wherein the control device is configured to control the opening degrees of the first oil return adjusting valve and the second oil return adjusting valve based on a ratio of an operating capacity of the first compressor to an operating capacity of the second compressor.

According to the above, the opening degrees of the first oil return adjusting valve and the second oil return adjusting valve are controlled, so that even when the suction pressures of the first compressor and the second compressor are different from each other, appropriate amounts of lubricating oil can be returned to the first compressor and the second compressor.

A fourth aspect of the present invention further includes a control device that is configured to control opening degrees of the first oil return adjusting valve and the second oil return adjusting valve, wherein the control device is configured to control the opening degrees of the first oil return adjusting valve and the second oil return adjusting valve, based on a ratio of a differential pressure between a discharge pressure and a suction pressure of the first compressor, to a differential pressure between a discharge pressure and a suction pressure of the second compressor.

According to the above, the opening degrees of the first oil return adjusting valve and the second oil return adjusting valve are controlled, so that even when the suction pressures of the first compressor and the second compressor are different from each other, appropriate amounts of lubricating oil can be returned to the first compressor and the second compressor.

Hereinafter, an embodiment of the present invention will be described with reference to the drawings. Note that the present invention is not limited by the embodiment.

(Embodiment 1)

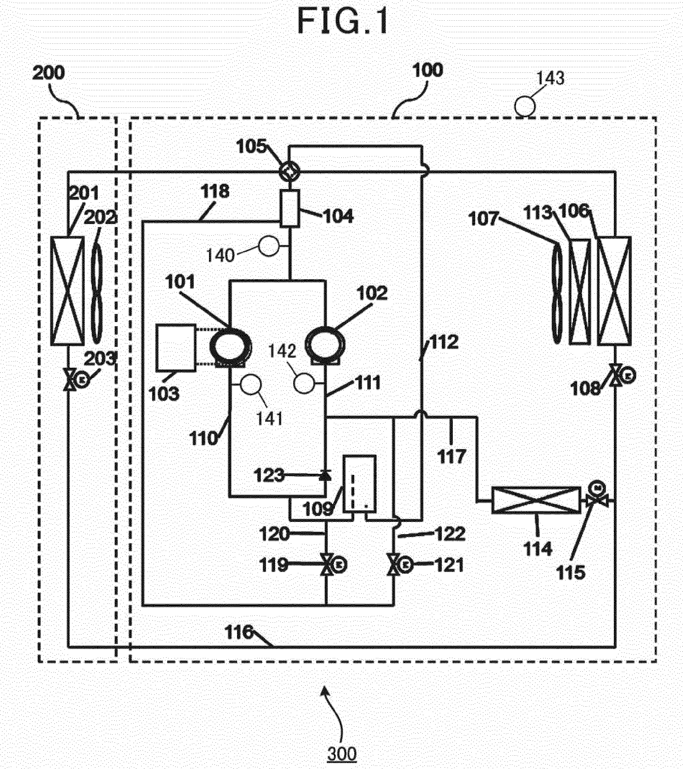

FIG. 1 illustrates a configuration of an air conditioning apparatus 300 in Embodiment 1 of the present invention.

The air conditioning apparatus 300 according to the present embodiment includes an outdoor unit 100 and an indoor unit 200. Note that in FIG. 1, only one indoor unit 200 is installed, but a plurality of indoor units may be installed in parallel, with respect to the outdoor unit 100.

The outdoor unit 100 includes a gas engine 103 with gas as a driving source, a first compressor 101 that obtains a driving force from the gas engine 103 to compress a refrigerant, and a second compressor 102 with an electric motor (not illustrated) as the driving source. In the present embodiment, as the first compressor 101, a compressor having a higher capability than the second compressor 102 is used.

Refrigerant discharge sides of the first compressor 101 and the second compressor 102 join each other and are provided with an oil separator 104. The oil separator 104 separates oil contained in discharge refrigerant gas of the first compressor 101 and the second compressor 102.

An outdoor heat exchanger 106 is connected to downstream of the oil separator 104 via a four-way valve 105. The four-way valve 105 is to switch a refrigerating cycle between cooling and heating. Note that in FIG. 1, at a heating operation time, the refrigerant flows as illustrated by a solid line in the drawing, and at a cooling operation time, the refrigerant flows as illustrated by a broken line in the drawing.

A radiator 113 for performing cooling of cooling water of the gas engine 103 is disposed at a leeward side of the outdoor heat exchanger 106. Further, in a vicinity of the radiator 113, an outdoor blower fan 107 for passing outside air through the outdoor heat exchanger 106 and the radiator 113 is disposed.

An outdoor decompression device 108 is provided at one side of the outdoor heat exchanger 106, and the outdoor decompression device 108 is connected to the indoor unit 200 via a refrigerant liquid pipe 116.

The indoor unit 200 includes an indoor heat exchanger 201, an indoor blower fan 202, and an indoor decompression device 203. The refrigerant liquid pipe 116 is connected to one end of the indoor heat exchanger 201 via the indoor decompression device 203.

The other end of the indoor heat exchanger 201 is connected to a low pressure gas pipe 112 via the four-way valve 105, and the low pressure gas pipe 112 is connected to a first suction pipe 110 of the first compressor 101 and a second suction pipe 111 of the second compressor 102 via an accumulator.

A bypass pipe 117 that is connected to the second suction pipe 111 is connected to a middle of the refrigerant liquid pipe 116 which connects the outdoor heat exchanger 106 and the indoor heat exchanger 201. The bypass pipe 117 is provided with an exhaust heat recovering decompression device (decompressing means) 115 and an exhaust heat recovering heat exchanger 114 sequentially from the refrigerant liquid pipe 116. The refrigerant which flows in the exhaust heat recovering heat exchanger 114 is configured to be able to absorb heat also from engine cooling water at a heating time.

Further, one end of an oil return pipe 118 is connected to a lower part of the oil separator 104, and the other end of the oil return pipe 118 is branched.

A first oil return pipe 120 at one side which is branched from the oil return pipe 118 is connected to the low pressure gas pipe 112 downstream of the accumulator 109 via a first oil return adjusting valve 119.

Further, a second oil return pipe 122 at the other side which is branched from the oil return pipe 118 is connected to the bypass pipe 117 downstream of the exhaust heat recovering heat exchanger 114 via a second oil return adjusting valve 121.

Further, the second suction pipe 111 is provided with a check valve 123 at an upstream side from a connection section of the bypass pipe 117 and the second suction pipe 111.

Note that the check valve 123 is not necessarily limited to a check valve. For example, the valve can be any valve that can prevent a medium pressure refrigerant which flows into the second suction pipe 111 via the bypass pipe 117 from flowing into the first suction pipe 110 where a low pressure refrigerant flows, such as an on-off valve.

Further, a discharge pressure sensor 140 that detects pressure of a discharge refrigerant is provided at a discharge side of the first compressor 101 and the second compressor 102. Further, a first suction pressure sensor 141 that detects pressure of a suction refrigerant of the first compressor 101 and a second suction pressure sensor 142 that detects pressure of a suction refrigerant of the second compressor 102 are respectively provided at suction sides of the first compressor 101 and the second compressor 102. Further, an outside air temperature sensor 143 that detects an outside air temperature is provided.

Next, a control configuration of the present embodiment will be described.

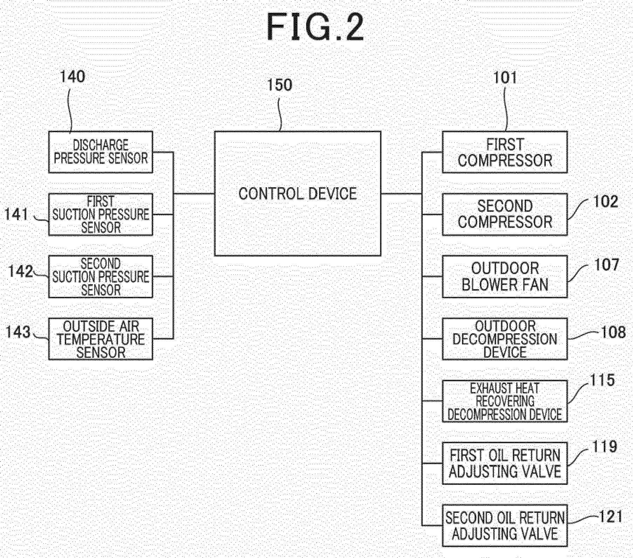

FIG. 2 is a block diagram illustrating the control configuration of the air conditioning apparatus 300 of the present embodiment.

As illustrated in FIG. 2, the air conditioning apparatus 300 includes a control device 150.

The control device 150 can be realized by using one or a plurality of microcomputers. In that case, the microcomputer can have a configuration including, for example, a CPU, a ROM and a flash memory, and a RAM, and the CPU executes a computer program stored in the ROM while using the RAM as a working region, and collectively controls the respective sections of the air conditioning apparatus 300.

In the present embodiment, the control device 150 is configured to receive detection results from the discharge pressure sensor 140, the first suction pressure sensor 141, the second suction pressure sensor 142 and the outside air temperature sensor 143, and control the first compressor 101, the second compressor 102, the outdoor blower fan 107, the outdoor decompression device 108, the exhaust heat recovering decompression device, the first oil return adjusting valve 119 and the second oil return adjusting valve 121 respectively.

In the present embodiment, the control device 150 controls opening degrees of the first oil return adjusting valve 119 and the second oil return adjusting valve 121. The opening degree control is performed proportionally to operating capacities of the first compressor 101 and the second compressor 102, for example. Note that an operating capacity of the compressor is a value that is obtained as a product of an exclusion capacity of the compressor and an operating rotational speed of the compressor.

For example, when an exclusion capacity of the first compressor 101 is 240 cc, a rotational speed of the first compressor 101 is 40 Hz, an exclusion capacity of the second compressor 102 is 60 cc, and a rotational speed of the second compressor 102 is 80 Hz, a ratio of an operating capacity of the first compressor 101 to an operating capacity of the second compressor 102 is obtained as follows.

$$\text{Operating capacity ratio} = (240 \times 40):(60 \times 80) = 96:48 = 2:1$$

In this case, the ratio of the operating capacity of the first compressor 101 to the operating capacity of the second compressor 102 is 2:1, so that the control device 150 controls the opening degree of the first oil return adjusting valve 119 (the opening degree of 0 to 480 pulses) to 200 pulses, and controls an opening degree of the second oil return adjusting valve 121 (the opening degree of 0 to 480 pulses) to 100 pulses.

Further, as another opening degree control, the opening degrees of the first oil return adjusting valve 119 and the second oil return adjusting valve 121 may be controlled in accordance with a ratio of a differential pressure between a discharge pressure by the discharge pressure sensor 140 and a suction pressure by the first suction pressure sensor 141, to a differential pressure between the discharge pressure by the discharge pressure sensor 140 and a suction pressure by the second suction pressure sensor 142.

Specifically, when the discharge pressures (Ph) of the first compressor 101 and the second compressor 102 are 2.8 MPa, and the suction pressure (P1) of the first compressor 101 is 0.6 MPa, a differential pressure from the discharge pressure (Ph-P1) is 2.2 MPa. Further, when the suction pressure (P2) of the second compressor is 1.7 MPa, a differential pressure from the discharge pressure (Ph-P2) is 1.1 MPa.

A ratio of the differential pressure in the first compressor 101 to the differential pressure in the second compressor 102 is obtained as follows.

$$\text{Ratio between the differential pressures of the discharge pressures and the suction}$$

$$\text{pressures} = 2.2:1.1 = 2:1$$

In this case, the ratio between the differential pressures of the discharge pressures and the suction pressures of the first compressor 101 and the second compressor 102 is 2:1, so that the control device 150 controls the opening degree of the first oil return adjusting valve 119 (the opening degree of 0 to 480 pulses) to 200 pulses, and controls the opening degree of the second oil return adjusting valve 121 (the opening degree of 0 to 480 pulses) to 100 pulses.

Further, in the present embodiment, the first compressor 101 is driven by the gas engine 103, so that a so-called open compressor in which a drive shaft penetrates through a compressor casing is used, and as the second compressor 102, an enclosed rotary compressor is used.

In general, an open compressor has a large discharge amount of lubricating oil with respect to an enclosed compressor. This is because in the enclosed compressor, an electric motor is housed in a compressor casing, and the electric motor also has a function as an oil separator in the compressor casing. That is, the refrigerant which is compressed in a compressing mechanism section passes through an electric motor section while the refrigerant is discharged from a discharge port, so that a lubricating oil adheres to the electric motor, and the electric motor has a function of separating oil.

Consequently, in the present embodiment, as for the lubricating oil discharge amount, the discharge amount of the first compressor 101 is larger than the discharge amount of the second compressor 102, so that a diameter (a maximum flow rate value) of the first oil return adjusting valve 119 may be made larger than a diameter of the second oil return adjusting valve 121. Further, the opening degrees of the first oil return adjusting valve 119 and the second oil return adjusting valve 121 may be controlled in accordance with a lubricating oil discharge amount in the operating capacity of the first compressor 101 grasped in advance, and a lubricating oil discharge amount in the operating capacity of the second compressor 102.

Next, an operation of the air conditioning apparatus 300 of the present embodiment will be described.

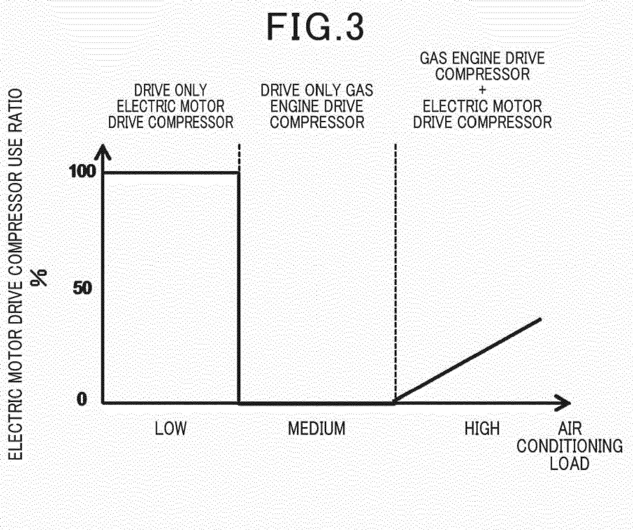

FIG. 3 is a diagram illustrating a relationship of a use ratio of the first compressor 101 and the second compressor 102 to an air conditioning load.

As illustrated in FIG. 3, it is found that in the air conditioning apparatus 300 of the present embodiment, only the second compressor 102 which is driven by the electric motor is driven when the air conditioning load is small, only the first compressor 101 which is driven by the gas engine 103 is driven when the air conditioning load is about medium, and when the air conditioning load is high, the first compressor 101 which is driven by the gas engine 103 is driven at a maximum output, and an insufficient amount is made up for by the second compressor 102 which is driven by the electric motor, whereby the highest energy efficiency is obtained, from the test calculation result and the actual machine evaluation result of the inventors.

In the air conditioning apparatus 300 of the present embodiment, in the case of the air conditioning load being high in the heating operation, a low-temperature and low-pressure gas refrigerant that absorbs heat from air (outside air) is compressed to a high temperature and a high pressure by the first compressor 101 which is driven by the gas engine 103, and a medium-temperature and medium-pressure gas refrigerant that absorbs heat from exhaust heat of the gas engine 103 is compressed to a high temperature and a high pressure by the second compressor 102 which is driven by the electric motor.

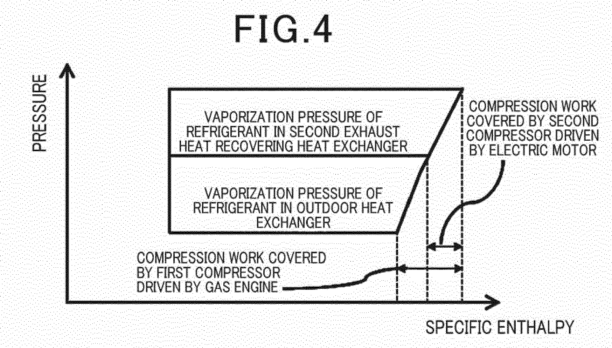

FIG. 4 is a Molier chart illustrating a refrigerating cycle operating point in the present embodiment.

As illustrated in FIG. 4, it is found that in the present embodiment, a suction pressure of the second compressor 102 which is driven by the electric motor is higher than a suction pressure of the first compressor 101 which is driven by the gas engine 103, and a compression ratio (high pressure/low pressure) of the second compressor 102 which is driven by the electric motor becomes low, so that energy that is consumed by the second compressor 102 which is driven by the electric motor can be decreased.

Next, operations of the air conditioning apparatus 300 of the present embodiment will be described in detail separately in accordance with magnitudes of loads which are required, in the cooling operation, the heating operation and the respective operating states, with reference to FIG. 1.

(Cooling operation low load time)

At a low load time in the cooling operation, only the second compressor 102 with the electric motor as the driving source is driven. The exhaust heat recovering decompression device 115 is closed. The four-way valve 105 is set to pass the refrigerant along a broken line.

The high-temperature and high-pressure refrigerant which is compressed by the second compressor 102 flows into the oil separator 104. A gas refrigerant with high purity from which oil is separated in the oil separator 104 passes through the four-way valve 105 and enters the outdoor heat exchanger 106. The gas refrigerant exchanges heat with outside air, radiates heat, condenses thereafter in the outdoor heat exchanger 106, and becomes a high pressure liquid refrigerant to pass through the decompression device 108 to be supplied to the indoor unit 200.

The high pressure liquid refrigerant that enters the indoor unit 200 is decompressed in the indoor equipment decompression device 203 to be in a gas-liquid two-phase state, and flows into the indoor heat exchanger 201. The refrigerant in the gas-liquid two-phase state exchanges heat with air in a space which is an air conditioning target to absorb heat and vaporize thereafter in the indoor heat exchanger 201, and becomes a gas refrigerant to flow out of the indoor unit 200.

The gas refrigerant which flows out of the indoor unit 200 returns to the outdoor unit 100 again. The gas refrigerant that flows into the outdoor unit 100 passes through the four-way valve 105 and the accumulator 109 to return to the second compressor 102, and repeats the aforementioned process.

Further, in the oil return pipe 118, the first oil return adjusting valve 119 is opened, and the second oil return adjusting valve 121 is closed. The lubricating oil which is separated in the oil separator 104 is returned to the low pressure gas pipe 112 through the oil return pipe 118 and the first oil return pipe 120, passes through the second suction pipe 111, returns to the second compressor 102, and repeats the aforementioned process.

(Cooling operation medium load time)

At a medium load time in the cooling operation, the first compressor 101 having the gas engine 103 as the driving source is driven. The exhaust heat recovering decompression device 115 is closed. The four-way valve 105 is set to pass the refrigerant to the broken line.

The high-temperature and high-pressure refrigerant which is compressed by the first compressor 101 flows into the oil separator 104. The gas refrigerant with high purity from which oil is separated in the oil separator 104 passes through the four-way valve 105 and enters the outdoor heat exchanger 106. The gas refrigerant exchanges heat with outside air, radiates heat, condenses thereafter in the outdoor heat exchanger 106, and becomes a high pressure liquid refrigerant to pass through the decompression device 108 to be supplied to the indoor unit 200.

The high pressure liquid refrigerant that enters the indoor unit 200 is decompressed in the indoor equipment decompression device 203 to be in a gas-liquid two-phase state, and flows into the indoor heat exchanger 201. The refrigerant in the gas-liquid two-phase state exchanges heat with air in a space which is an air conditioning target to absorb heat and vaporize thereafter in the indoor heat exchanger 201, and becomes a gas refrigerant to flow out of the indoor unit 200.

The gas refrigerant which flows out of the indoor unit 200 returns to the outdoor unit 100 again. The gas refrigerant that flows into the outdoor unit 100 passes through the four-way valve 105 and the accumulator 109 to return to the first compressor 101, and repeats the aforementioned process.

Further, in the oil return pipe 118, the first oil return adjusting valve 119 is opened, and the second oil return adjusting valve 121 is closed. The lubricating oil which is separated in the oil separator 104 is returned to the low pressure gas pipe 112 through the oil return pipe 118 and the first oil return pipe 120, passes through the first suction pipe 110, returns to the first compressor 101, and repeats the aforementioned process.

Note that exhaust heat which is generated by the gas engine 103 is carried to the radiator 113 by engine cooling water and a pump not illustrated, exchanges heat with outside air, and returns to the gas engine 103 again.

(Cooling high load time)

At a high load time in the cooling operation, both of the first compressor 101 having the gas engine 103 as the driving source, and the second compressor 102 having the electric motor as the driving source are driven. The exhaust heat recovering decompression device 115 is closed. The four-way valve 105 is set to pass the refrigerant to the broken line.

The high-temperature and high-pressure refrigerant which is compressed by the first compressor 101 and the second compressor 102 flows into the oil separator 104. The refrigerant which flows into the oil separator 104 becomes a gas refrigerant with high purity from which oil is separated, passes through the four-way valve 105 and enters the outdoor heat exchanger 106. The gas refrigerant exchanges heat with outside air, radiates heat, condenses thereafter in the outdoor heat exchanger 106, and becomes a high pressure liquid refrigerant to pass through the decompression device 108 to be supplied to the indoor unit 200.

The high pressure liquid refrigerant that enters the indoor unit 200 is decompressed in the indoor equipment decompression device 203 to be in a gas-liquid two-phase state, and flows into the indoor heat exchanger 201. The refrigerant in the gas-liquid two-phase state exchanges heat with air in a space which is an air conditioning target to absorb heat and vaporize thereafter in the indoor heat exchanger 201, and becomes a gas refrigerant to flow out of the indoor unit 200.

The gas refrigerant which flows out of the indoor unit 200 returns to the outdoor unit 100 again. The gas refrigerant that flows into the outdoor unit 100 passes through the four-way valve 105 and the accumulator 109, is branched thereafter to return to the first compressor 101 through the first suction pipe 110 of the first compressor 101, and to return to the second compressor 102 through the second suction pipe 111 of the second compressor 102, and repeats the aforementioned process.

Further, in the oil return pipe 118, the first oil return adjusting valve 119 is opened, and the second oil return adjusting valve 121 is closed. The lubricating oil separated in the oil separator 104 is returned to the low pressure gas pipe 112 through the oil return pipe 118 and the first oil return pipe 120, returns to the first compressor 101 through the first suction pipe 110, returns to the second compressor 102 through the second suction pipe 111, and repeats the aforementioned process.

Note that exhaust heat which is generated by the gas engine 103 is carried to the radiator 113 by the engine cooling water and the pump not illustrated, exchanges heat with outside air, and returns to the gas engine 103 again.

(Heating operation low load time)

At a low load time in the heating operation, only the second compressor 102 having the electric motor as the driving source is driven. The exhaust heat recovering decompression device 115 is closed. The four-way valve 105 is set to pass the refrigerant to a solid line.

The high-temperature and high-pressure refrigerant which is compressed by the second compressor 102 flows into the oil separator 104. A gas refrigerant with high purity from which oil is separated in the oil separator 104 is supplied to the indoor unit 200 through the four-way valve 105.

The high-temperature and high-pressure gas refrigerant which enters the indoor unit 200 flows into the indoor heat exchanger 201, exchanges heat with air in a space which is an air conditioning target to radiate heat, condenses thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 is decompressed in the decompression device 108 to be in a gas-liquid two-phase state and flows into the outdoor heat exchanger 106. The refrigerant in the gas-liquid two-phase state exchanges heat with outside air to absorb heat and vaporize thereafter in the outdoor heat exchanger 106 to become a gas refrigerant to pass through the four-way valve 105 and the accumulator 109 to return to the second compressor 102, and repeats the above described process.

Further, in the oil return pipe 118, the first oil return adjusting valve 119 is opened, and the second oil return adjusting valve 121 is closed. The lubricating oil which is separated in the oil separator 104 is returned to the low pressure gas pipe 112 through the oil return pipe 118 and the first oil return pipe 120, passes through the second suction pipe 111, returns to the second compressor 102, and repeats the aforementioned process.

(Heating medium load time)

At a medium load time in the heating operation, the first compressor 101 having the gas engine 103 as the driving source is driven. The exhaust heat recovering decompression device 115 is closed. The four-way valve 105 is set to pass the refrigerant to the solid line.

The high-temperature and high-pressure refrigerant which is compressed by the first compressor 101 flows into the oil separator 104. A gas refrigerant with high purity from which oil is separated in the oil separator 104 is supplied to the indoor unit 200 through the four-way valve 105.

The high-temperature and high-pressure gas refrigerant which enters the indoor unit 200 flows into the indoor heat exchanger 201, exchanges heat with air in a space which is an air conditioning target to radiate heat and condense thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 is decompressed in the decompression device 108 to be in a gas-liquid two-phase state and flows into the outdoor heat exchanger 106. The refrigerant in the gas-liquid two-phase state exchanges heat with outside air to absorb heat and vaporize thereafter, and becomes a gas refrigerant. Thereafter, the gas refrigerant passes through the four-way valve 105 and the accumulator 109, returns to the first compressor 101, and repeats the aforementioned process.

Further, in the oil return pipe 118, the first oil return adjusting valve 119 is opened, and the second oil return adjusting valve 121 is closed. The lubricating oil which is separated in the oil separator 104 is returned to the low pressure gas pipe 112 through the oil return pipe 118 and the first oil return pipe 120, passes through the first suction pipe 110, returns to the first compressor 101, and repeats the aforementioned process.

(Heating high load time)

At a high load time in the heating operation, the first compressor 101 having the gas engine 103 as the driving source, and the second compressor 102 with the electric motor as the driving source are driven. The exhaust heat recovering decompression device 115 is opened. The four-way valve 105 is set to pass the refrigerant to the solid line.

The high-temperature and high-pressure refrigerant which is compressed by the first compressor 101 and the second compressor 102 flows into the oil separator 104. The refrigerant which flows into the oil separator 104 becomes a gas refrigerant with high purity from which oil is separated, passes through the four-way valve 105, and is supplied to the indoor unit 200.

The high-temperature and high-pressure gas refrigerant which enters the indoor unit 200 flows into the indoor heat exchanger 201, exchanges heat with air in a space which is an air conditioning target to radiate heat and condense thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 partially flows into the bypass pipe 117. The remaining liquid refrigerant which does not flow into the bypass pipe 117 is decompressed in the decompression device 108 to be in a gas-liquid two-phase state and flows into the outdoor heat exchanger 106. The refrigerant in the gas-liquid two-phase state exchanges heat with outside air to absorb heat and vaporize thereafter, and becomes a low-temperature and low-pressure gas refrigerant. Thereafter, the gas refrigerant passes through the four-way valve 105, the accumulator 109 and the first suction pipe 110 of the first compressor 101, and returns to the first compressor 101.

The liquid refrigerant which flows into the bypass pipe 117 is decompressed in the exhaust heat recovering decompression device 115, is in the gas-liquid two-phase state and flows into the exhaust heat recovering heat exchanger 114. The refrigerant in the gas-liquid two-phase state which flows into the exhaust heat recovering heat exchanger 114 absorbs heat from the engine cooling water not illustrated, vaporizes thereafter, and becomes a medium-temperature and medium-pressure gas refrigerant. The medium-temperature and medium-pressure gas refrigerant passes through the bypass pipe 117, and returns to the second compressor 102.

Here, the second suction pipe 111 of the second compressor 102 is provided with a check valve 123, so that the medium-temperature and medium-pressure gas refrigerant is not sucked by the first compressor 101.

Accordingly, the low-temperature and low-pressure gas refrigerant which is vaporized in the outdoor heat exchanger 106 returns to the first compressor 101, and is compressed to be a high-temperature and high-pressure gas refrigerant, whereas the medium-temperature and medium-pressure gas refrigerant which is vaporized in the exhaust heat recovering heat exchanger 114 returns to the second compressor 102 to be compressed to be the high-temperature and high-pressure gas refrigerant, and repeats the aforementioned process.

Further, in the oil return pipe 118, the first oil return adjusting valve 119 and the second oil return adjusting valve 121 are both opened. The lubricating oil separated in the oil separator 104 passes through the oil return pipe 118, and a part of the lubricating oil is returned to the low pressure gas pipe 112 through the first oil return adjusting valve 119 and the first oil return pipe 120 and is sucked by the first compressor 101.

The remaining lubricating oil is returned to the bypass pipe 117 through the second oil return adjusting valve 121 and the second oil return pipe 122, passes through the second suction pipe 111, is sucked by the second compressor 102, and repeats the aforementioned process.

In this case, as described above, based on the ratio of the operating capacity of the first compressor 101 to the operating capacity of the second compressor 102, the opening degrees of the first oil return adjusting valve 119 and the second oil return adjusting valve 121 are controlled by the control device 150.

Further, based on the ratio of the differential pressure between the discharge pressure and the suction pressure of the first compressor, to the differential pressure between the discharge pressure and the suction pressure of the second compressor 102, the opening degrees of the first oil return adjusting valve 119 and the second oil return adjusting valve 121 may be controlled.

As described above, in the present embodiment, the bypass pipe 117 which connects the second suction pipe 111 of the second compressor 102 and the refrigerant liquid pipe 116 is provided, the exhaust heat recovering decompression device and the exhaust heat recovering heat exchanger are provided in the bypass pipe 117 sequentially from the refrigerant liquid pipe 116, the oil separator 104 is provided upstream of a junction section of the discharge pipes of the first compressor 101 and the second compressor 102, the oil return pipe 118 is provided in a bottom portion of the oil separator 104, and the oil return pipe 118 is connected to the first oil return pipe 120 which is connected to the low pressure gas pipe 112 downstream of the accumulator 109 via the first oil return adjusting valve 119, and to the second oil return pipe 122 which is connected to the bypass pipe 117 downstream of the exhaust heat recovering heat exchanger 114 via the second oil return adjusting valve 121.

Consequently, at an individual operation of the first compressor 101 or the second compressor 102, or when exhaust heat recovery is not performed in a parallel operation of the first compressor 101 and the second compressor 102, the lubricating oil separated in the oil separator 104 can be returned to the first compressor 101 and the second compressor 102 irrespective of the operating states of the first compressor 101 and the second compressor 102 by adjusting the first oil return adjusting valve 119 and the second oil return adjusting valve 121, so that the number of oil separators 104 can be made one. As a result, reduction in size of the apparatus can be achieved while a highly efficient heating operation is realized.

Further, since the exhaust heat recovering decompression device 115 and the exhaust heat recovering heat exchanger 114 are provided in the bypass pipe 117, so that it becomes possible to properly set the pressures of the refrigerant which vaporizes in the outdoor heat exchanger 106 and the refrigerant which vaporizes in the exhaust heat recovering heat exchanger 114 in accordance with the temperatures of the respective heat absorption sources, the pressure of the refrigerant which vaporizes in the exhaust heat recovering heat exchanger 114 can be set to be higher than the pressure of the refrigerant which evaporates in the air heat exchanger, and power of the second compressor 102 which sucks the refrigerant which is vaporized in the exhaust heat recovering heat exchanger 114 can be reduced.

Further, exhaust heat of the gas engine 103 which is adopted as the driving means of the first compressor 101 is used in heating of the refrigerant which is sucked by the second compressor 102 having the electric motor as the driving source, so that it becomes possible to make the number of oil separators 104 one while achieving high efficiency at the heating time.

Further, in the present embodiment, in the second suction pipe 111 of the second compressor 102, the check valve 123 is provided at the upstream side from the connection section of the bypass pipe 117.

Thereby, the medium pressure refrigerant which flows into the second suction pipe 111 via the bypass pipe 117 can be prevented from flowing into the first suction pipe 110 where the low-pressure refrigerant flows.

Further, in the present embodiment, the control device 150 which controls the opening degrees of the first oil return adjusting valve 119 and the second oil return adjusting valve 121 is included, the control device 150 controls the opening degrees of the first oil return adjusting valve 119 and the second oil return adjusting valve 121 based on the ratio of the operating capacity of the first compressor 101 to the operating capacity of the second compressor 102.

Thereby, the opening degrees of the first oil return adjusting valve 119 and the second oil return adjusting valve 121 are controlled, so that even when the suction pressures of the first compressor 101 and the second compressor 102 are different from each other, appropriate amounts of lubricating oil can be returned to the first compressor 101 and the second compressor 102.

Further, in the present embodiment, the control device 150 controls the opening degrees of first oil return adjusting valve 119 and the second oil return adjusting valve 121 based on the ratio of the differential pressure between the discharge pressure and the suction pressure of the first compressor 101, to the differential pressure between the discharge pressure and the suction pressure of the second compressor 102.

Thereby, the opening degrees of the first oil return adjusting valve 119 and the second oil return adjusting valve 121 are controlled, so that even when the suction pressures of the first compressor 101 and the second compressor 102 are different, appropriate amounts of lubricating oil can be returned to the first compressor 101 and the second compressor 102.

The present invention is not limited to the aforementioned embodiment, and various modifications can be made within the scope of the appended claims.

For example, in the present embodiment, at the heating high load time, a low-temperature and low-pressure gas refrigerant is sucked by the first compressor 101 which is driven by the gas engine 103, and a medium-temperature and medium-pressure gas refrigerant is sucked by the second compressor 102 which is driven by the electric motor respectively, but the-low temperature and low-pressure gas refrigerant may be sucked by the second compressor 102 which is driven by the electric motor, and the medium-temperature and medium-pressure gas refrigerant may be sucked by the first compressor 101 which is driven by the gas engine 103. Further, the first compressor 101 and the second compressor 102 may be both driven by the gas engine 103.

The air conditioning apparatus according to the present invention can be favorably used as an air conditioner capable of performing a highly efficient operation irrespective of an air conditioning load, by selecting the driving sources of the compressors in accordance with the air conditioning load.

REFERENCE SIGNS LIST

| | |
|---|---|
| 100 | Outdoor unit |
| 101 | First compressor |
| 102 | Second compressor |
| 103 | Gas engine |
| 104 | Oil separator |
| 109 | Accumulator |
| 110 | First suction pipe |
| 111 | Second suction pipe |
| 112 | Low pressure gas pipe |
| 114 | Exhaust heat recovering heat exchanger |
| 115 | Exhaust heat recovering decompression device |
| 116 | Refrigerant Liquid pipe |
| 117 | Bypass pipe |
| 118 | Oil return pipe |
| 119 | First oil return adjusting valve |
| 120 | First oil return pipe |
| 121 | Second oil return adjusting valve |
| 122 | Second oil return pipe |
| 123 | Check valve |
| 150 | Control device |
| 200 | Indoor unit |
| 300 | Air conditioning apparatus |

**Claims**

1. An air conditioning apparatus that performs air conditioning by circulating a refrigerant, the air conditioning apparatus including a first compressor (101) having a gas engine (103) as a driving source and a second compressor (102) having an electric motor as a driving source, the first compressor (101) and the second compressor (102) being connected in parallel, the air conditioning further including a bypass pipe (117), a refrigerant liquid pipe (116), an exhaust heat recovering decompression device (115) and an exhaust heat recovering heat exchanger (114) wherein the bypass pipe (117) connects a suction pipe (111) of the second compressor (102) and the refrigerant liquid pipe (116), wherein the exhaust heat recovering decompression device (115) and the exhaust heat recovering heat exchanger (114) are provided in the bypass pipe (117) sequentially from the refrigerant liquid pipe (116), the air conditioning apparatus further including an oil separator (104) upstream of a junction section of discharge pipes of the first compressor (101) and the second compressor (102), an accumulator (109) and an oil return pipe (118) in a bottom portion of the oil separator (104), the air conditioning apparatus **characterised by** further including a first oil return pipe (120), a first oil return adjusting valve (119), a second oil return pipe (122), a second oil return adjusting valve (121) and a low pressure gas pipe (112), wherein the oil return pipe (118) is connected to the first oil return pipe (120) and the second oil return pipe (122), the first oil return pipe (118) is connected to the low pressure gas pipe (112) downstream of the accumulator (109) via the first oil return adjusting valve (119), the second oil return pipe (122) is connected to the bypass pipe (117) downstream of the exhaust heat recovering heat exchanger (114) via the second oil return adjusting valve (121).

2. The air conditioning apparatus according to claim 1, wherein in the suction pipe (110) of the second compressor (102), a check valve (123) is provided at an upstream side from a connection section of the bypass pipe (117) and the suction pipe (110).

3. The air conditioning apparatus according to claim 1 or 2, further comprising a control device (150) which is configured to control opening degrees of the first oil return adjusting valve (119) and the second oil return adjusting valve (121), wherein the control device (150) is configured to control the opening degrees of the first oil return adjusting valve (119) and the second oil return adjusting valve (121) based on a ratio of an operating capacity of the first compressor (101) to an operating capacity of the second compressor (102).

4. The air conditioning apparatus according to claim 1 or 2, further comprising a control device (150) that is configured to control opening degrees of the first oil return adjusting valve (119) and the second oil return adjusting valve (121), wherein the control device (150) is configured to control the opening degrees of the first oil return adjusting valve (119) and the second oil return adjusting valve (121), based on a ratio of a differential pressure between a discharge pressure and a suction pressure of the first compressor (101), to a differential pressure between a discharge pressure and a suction pressure of the second compressor (102).

**Patentansprüche**

1. Klimatisierungsvorrichtung, welche die Klimatisierung durch Zirkulierenlassen eines Kältemittels durchführt, wobei die Klimatisierungsvorrichtung einen ersten Kompressor (101) mit einem Gasmotor (103) als Antriebsquelle und einen zweiten Kompressor (102) mit einem Elektromotor als Antriebsquelle umfasst, wobei der erste Kompressor (101) und der zweite Kompressor (102) parallel geschaltet sind, wobei die Klimatisierung ferner eine Umgehungsleitung (117), eine Kühlflüssigkeitsleitung (116), eine Abwärmerückgewinnungs-Dekompressionseinrichtung (115) und einen Abwärmerückgewinnungs-Wärmetauscher (114) umfasst, wobei die Umgehungsleitung (117) eine Ansaugleitung (111) des zweiten Kompressors (102) und die Kühlflüssigkeitsleitung (116) verbindet, wobei die Abwärmerückgewinnungs-Dekompressionseinrichtung (115) und der Abwärmerückgewinnungs-Wärmetauscher (114) der Reihe nach von der Kühlflüssigkeitsleitung (116) her in der Umgehungsleitung (117) vorgesehen sind, wobei die Klimatisierungsvorrichtung ferner einen Ölabscheider (104) stromaufwärts eines Anschlussabschnitts von Auslassleitungen des ersten Kompressors (101) und des zweiten Kompressors (102), einen Speicher (109) und eine Ölrücklaufleitung (118) in einem unteren Abschnitt des Ölabscheiders (104) umfasst, wobei die Klimatisierungsvorrichtung **dadurch gekennzeichnet ist, dass** sie ferner eine erste Ölrücklaufleitung (120), ein erstes Ölrücklaufeinstellventil (119), eine zweite Ölrücklaufleitung (122), ein zweites Ölrücklaufeinstellventil (121) und eine Niederdruckgasleitung (112) umfasst, wobei die Ölrücklaufleitung (118) mit der ersten Ölrücklaufleitung (120) und der zweiten Ölrücklaufleitung (122) verbunden ist, wobei die erste Ölrücklaufleitung (118) stromabwärts des Speichers (109) über das erste Ölrücklaufeinstellventil (119) mit der Niederdruckgasleitung (112) verbunden ist, wobei die zweite Ölrücklaufleitung (122) stromabwärts des Abwärmerückgewinnungs-Wärmetauschers (114) über das zweite Ölrücklaufeinstellventil (121) mit der Umgehungsleitung (117) verbunden ist.

2. Klimatisierungsvorrichtung nach Anspruch 1, wobei in der Ansaugleitung (110) des zweiten Kompressors (102) ein Rückschlagventil (123) auf einer stromaufwärts liegenden Seite von einem Verbindungsabschnitt der Umgehungsleitung (117) und der Ansaugleitung (110) her vorgesehen ist.

3. Klimatisierungsvorrichtung nach Anspruch 1 oder 2, ferner umfassend eine Steuervorrichtung (150), die dazu eingerichtet ist, Öffnungsgrade des ersten Ölrücklaufeinstellventils (119) und des zweiten Ölrücklaufeinstellventils (121) zu steuern, wobei die Steuervorrichtung (150) dazu eingerichtet ist, die Öffnungsgrade des ersten Ölrücklaufeinstellventils (119) und des zweiten Ölrücklaufeinstellventils (121) auf der Grundlage eines Verhältnisses einer Betriebskapazität des ersten Kompressors (101) zu einer Betriebskapazität des zweiten Kompressors (102) zu steuern.

4. Klimatisierungsvorrichtung nach Anspruch 1 oder 2, ferner umfassend eine Steuervorrichtung (150), die dazu eingerichtet ist, Öffnungsgrade des ersten Ölrücklaufeinstellventils (119) und des zweiten Ölrücklaufeinstellventils (121) zu steuern,

wobei die Steuervorrichtung (150) dazu eingerichtet ist, die Öffnungsgrade des ersten Ölrücklaufeinstellventils (119) und des zweiten Ölrücklaufeinstellventils (121) auf der Grundlage eines Verhältnisses eines Differenzdrucks zwischen einem Enddruck und einem Saugdruck des ersten Kompressors (101) zu einem Differenzdruck zwischen einem Enddruck und einen Saugdruck des zweiten Kompressors (102) zu steuern.

**Revendications**

1. Appareil de climatisation qui réalise une climatisation par le fait de faire circuler un fluide frigorigène, l'appareil de climatisation comprenant un premier compresseur (101) présentant un moteur à gaz (103) en tant que source d'entraînement et un deuxième compresseur (102) présentant un moteur électrique comme source d'entraînement, le premier compresseur (101) et le deuxième compresseur (102) étant reliés en parallèle, l'appareil de climatisation comprenant en outre un tuyau de dérivation (117), un tuyau à liquide frigorigène (116), un dispositif de décompression de récupération de chaleur perdue (115) et un échangeur de chaleur de récupération de chaleur perdue (114), le tuyau de dérivation (117) reliant un tuyau d'aspiration (111) du deuxième compresseur (102) et le tuyau à liquide frigorigène (116), le dispositif de décompression de récupération de chaleur perdue (115) et l'échangeur de chaleur de récupération de chaleur perdue (114) étant disposés dans le tuyau de dérivation (117) séquentiellement à partir du tuyau à liquide frigorigène (116), l'appareil de climatisation comprenant en outre un séparateur d'huile (104) en amont d'une section de jonction de tuyaux d'évacuation du premier compresseur (101) et du deuxième compresseur (102), un accumulateur (109) et un tuyau de retour d'huile (118) dans une partie inférieure du séparateur d'huile (104), l'appareil de climatisation étant **caractérisé en ce qu'**il comprend en outre un premier tuyau de retour d'huile (120), une première vanne de réglage de retour d'huile (119), un deuxième tuyau de retour d'huile (122), une deuxième vanne de réglage de retour d'huile (121) et un tuyau à gaz basse pression (112), le tuyau de retour d'huile (118) étant relié au premier tuyau de retour d'huile (120) et au deuxième tuyau de retour d'huile (122), le premier tuyau de retour d'huile (118) étant relié au tuyau à gaz basse pression (112) en aval de l'accumulateur (109) par l'intermédiaire de la première vanne de réglage de retour d'huile (119), le deuxième tuyau de retour d'huile (122) étant relié au tuyau de dérivation (117) en aval de l'échangeur de chaleur de récupération de chaleur perdue (114) par l'intermédiaire de la deuxième vanne de réglage de retour d'huile (121).

2. Appareil de climatisation selon la revendication 1, un clapet de non-retour (123) étant disposé dans le tuyau d'aspiration (110) du deuxième compresseur (102) au niveau d'un côté amont par rapport à une section de raccordement du tuyau de dérivation (117) et du tuyau d'aspiration (110).

3. Appareil de climatisation selon la revendication 1 ou 2, comprenant en outre un dispositif de commande (150) qui est conçu pour commander des degrés d'ouverture de la première vanne de réglage de retour d'huile (119) et de la deuxième vanne de réglage de retour d'huile (121),

le dispositif de commande (150) étant conçu pour commander les degrés d'ouverture de la première vanne de réglage de retour d'huile (119) et de la deuxième vanne de réglage de retour d'huile (121) sur la base d'un rapport d'une capacité de fonctionnement du premier compresseur (101) à une capacité de fonctionnement du deuxième compresseur (102).

4. Appareil de climatisation selon la revendication 1 ou 2, comprenant en outre un dispositif de commande (150) qui est conçu pour commander des degrés d'ouverture de la première vanne de réglage de retour d'huile (119) et de la deuxième vanne de réglage de retour d'huile (121),

le dispositif de commande (150) étant conçu pour commander les degrés d'ouverture de la première vanne de réglage de retour d'huile (119) et de la deuxième vanne de réglage de retour d'huile (121), sur la base d'un rapport d'une pression différentielle entre une pression de refoulement et une pression d'aspiration du premier compresseur (101) à une pression différentielle entre une pression de refoulement et une pression d'aspiration du deuxième compresseur (102).

# FIG.1

# FIG.2

140 — DISCHARGE PRESSURE SENSOR

141 — FIRST SUCTION PRESSURE SENSOR

142 — SECOND SUCTION PRESSURE SENSOR

143 — OUTSIDE AIR TEMPERATURE SENSOR

150 — CONTROL DEVICE

101 — FIRST COMPRESSOR

102 — SECOND COMPRESSOR

107 — OUTDOOR BLOWER FAN

108 — OUTDOOR DECOMPRESSION DEVICE

115 — EXHAUST HEAT RECOVERING DECOMPRESSION DEVICE

119 — FIRST OIL RETURN ADJUSTING VALVE

121 — SECOND OIL RETURN ADJUSTING VALVE

# FIG.3

# FIG.4

PRESSURE

VAPORIZATION PRESSURE OF REFRIGERANT IN SECOND EXHAUST HEAT RECOVERING HEAT EXCHANGER

VAPORIZATION PRESSURE OF REFRIGERANT IN OUTDOOR HEAT EXCHANGER

COMPRESSION WORK COVERED BY SECOND COMPRESSOR DRIVEN BY ELECTRIC MOTOR

COMPRESSION WORK COVERED BY FIRST COMPRESSOR DRIVEN BY GAS ENGINE

SPECIFIC ENTHALPY

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003056944 A

- EP 2908062 A1